(19) Europäisches Patentamt
European Patent Office
Office européen des brevets

(11) **EP 4 443 131 A1**

(12) **EUROPEAN PATENT APPLICATION**

(43) Date of publication:
**09.10.2024 Bulletin 2024/41**

(51) International Patent Classification (IPC):
**G01N 11/00** $^{(2006.01)}$

(21) Application number: **23166424.4**

(52) Cooperative Patent Classification (CPC):
**G01N 11/00;** G01N 2011/002; G01N 2011/0093

(22) Date of filing: **04.04.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SAINT-GOBAIN ISOVER**
**92400 Courbevoie (FR)**

(72) Inventors:
• **JANIAUD, Eric**
**93300 Aubervilliers (FR)**
• **BOUSQUET, David**
**92400 Courbevoie (FR)**

(74) Representative: **Saint-Gobain Recherche**
**B.P. 135**
**39, quai Lucien Lefranc**
**93303 Aubervilliers Cedex (FR)**

(54) **METHOD AND SYSTEM FOR DETERMINING THE SPECIFIC TEMPERATURE CORRESPONDING TO A VISCOMETRIC FIXED POINT FOR A FREE FLUID STREAM**

(57)    A computer implemented method for determining the specific temperature, Tlog, corresponding to a viscometric fixed point of a fluid. The method takes as input one value of the dynamic viscosity and one value of the temperature of the fluid. The method provides as output a value of the characteristic temperature Tlog3. The characteristic temperature Tlog3 is computed by means of a VFT-like model, wherein said the adjustable parameters of the VFT-like model comprise a chemical composition-dependent adjustable parameter, T0, which depends on the chemical composition of the fluid, and wherein which the adjustable parameters of said VFT-like model are statistically adjusted over a dataset of experimental and/or simulated temperature-dynamic viscosity values for said fluid within a chemical composition range.

[Fig. 1]

Fig. 1

**Description**

**Technical field**

The present disclosure pertains to methods and systems for determining the specific temperature corresponding to a viscometric fixed point for a free fluid stream under industrial environments, in particular in industrial processes for glass manufacturing, more specifically for the manufacturing of mineral glass fibres-based materials, e.g., mineral wool such as glass wool or stone wool.

**Technical background**

Within manufacturing lines of mineral wool, the molten glass or stone coming from glass or stone melting furnaces is carried through a forehearth to feed a fiberizing tool. Two methods of fiberizing are commonly used in the art: the internal centrifugation and the external centrifugation.

From the forehearth to the fiberizing tool the molten glass flows through what is called a bushing. The bushing is generally designed as an opening extended by a nozzle or drain pan and terminated by a hole from which the molten glass flows by gravity. Depending on its size and diameter, the bushing controls the flow rate of the molten glass into the fiberizing tool.

In the method of internal centrifugation, a fiberizing tool usually comprises a high-speed rotating device, called a centrifuge, a spinner, or a spinning plate, which is made of an annular wall through which calibrated holes have been drilled. Upon feeding with the molten glass coming out of the bushing, the high-speed rotating device projects the molten glass through the drilled holes to cast glass threads. The plane section of the hole of the bushing is generally perpendicular to the flow direction of the molten glass, i.e., perpendicular to the gravity.

The fiberizing tool also comprises a ring or annular burner which throws an elevated temperature gaseous stream or jet in a substantially tangent direction to the annular wall to pull down the casted glass threads. The pulling stream or jet also allows to heat and stretch the glass threads and form glass fibres.

In the method of external centrifugation, the molten glass or rock flows on the circumferential surface of at least one rotating rotor of a plurality of rotating rotors. The molten material initially adheres to the surface and thereafter portions of the adhered material flung away from the surface by the centrifugal force created by the rotation of said rotor. In this method, the plane section of the hole of the bushing may be or not perpendicular to the flow direction of the molten glass, i.e., perpendicular to the gravity.

One requirement to obtain a high-quality product, e.g., stone or glass wool, is that the glass threads are properly stretched as they are casted out and pulled down from the rotating device. The pulling and stretching operation should not be too intense or too fast to avoid breakage while allowing sufficiently elongated glass fibres to be formed. Otherwise, the final product, e.g., stone or glass wool, will no longer meet the technical requirements regarding, for instance, thickness and insulation performances. The product must be discarded, resulting in financial losses for the manufacturer.

As the flow rate of a molten glass depends on its temperature and its chemistry, it is then a current practice to punctually take samples of molten glass before the bushing and to perform chemical analysis. It is also a widespread practice to punctually measure or continuously monitor the temperature of the molten glass in the vicinity of the bushing, e.g., just before, after, or inside the bushing.

On short term basis, the flow rate of a molten glass during the pulling and stretching operation may be controlled by changing its temperature in the vicinity of the bushing. The temperature adjustment may be performed through an adapted heating operation, e.g., Joule heating through flowing an electric current in a metallic bushing. On a long-term basis, the chemistry of the melted glass may also be changed by adapting the chemistry of the raw materials on the melting process.

Most fluid shows specific temperatures corresponding to what are called 'viscometric fixed points'. 'Viscometric fixed points' are pairs of temperature-viscosity values which characterize the viscosity-temperature behaviour of a fluid and depend on the chemical composition of said fluid. For a given fluid with a given chemical composition, a viscometric fixed point may be viewed as the temperature at which the fluid reaches a given value of viscosity, or inversely. Thus, a given fluid with a given chemical composition shows at a viscometric fixed point a specific unique temperature, and the chemical composition of the fluid may vary the value of this specific unique temperature at the same viscometric fixed point may vary accordingly.

Everything else being egal, a viscometric fixed point may be also viewed as a proxy for the chemical composition of fluid. Any drift in the chemical composition of the fluid may likely change the value of one its viscometric fixed points. Thus, for a given fluid with a given composition, monitoring the values of one or more viscometric fixed point may allow its chemical composition of the fluid to be monitored.

For molten glass or stone, five viscometric fixed points are commonly defined, i.e., the working point, the softening point, the annealing point, the strain point, and the transformation temperature. All of which are extensively detailed in the ISO 7884-1:1987 and ISO 7884-2:1987 standard that also describes the common methods by which they can be measured or determined. These methods are laboratory methods and are not adapted for industrial implementation, in particular in manufacturing lines of mineral wool.

Alternately, several in-situ methods have been developed for determining the viscosity of a free-falling stream of fluid on manufacturing lines.

US 4 877 436 A [SHEINKOP ISAC [US]] 31.10.1989 discloses a method for controlling the flow rate and the viscosity of molten glass during production. The method relies on the calculation of the viscosity of the molten glass with the Hagen-Poiseuille law for which a prior knowledge of the density of the molten glass is required.

PCT/EP2022/086258 [SAINT-GOBAIN ISOVER], the content of which is incorporated herein by reference, describes a method for measuring the viscosity of a fluid stream flowing from an opening with constant acceleration by modelling the geometrical profile of the fluid stream and by computing the dynamic viscosity of the fluid with a mathematical or physical model from the modelled geometrical profile.

## Summary of the invention

### Technical problem

However effective the current methods for measuring the viscosity of free-falling stream of fluid may be, a major drawback is that they are only adapted for measuring a single value of viscosity of the fluid at a given time during operation of the manufacturing line. Since the viscosity is a function of both temperature and chemical composition, when monitoring the viscosity in manufacturing lines, an operator may still be blind to whether a change of said viscosity is due to a change in temperature or in chemical composition of the fluid, without also measuring the temperature or chemical composition of the fluid at the same time.

Furthermore, current methods are of no use to measure viscometric fixed points of the fluid and, thus, to use said viscometric fixed points as a proxy for in-situ real-time monitoring of the chemical composition of the fluid.

### Solution to the technical problem

In a first aspect of the invention, there is provided a computer implemented method for determining the specific temperature corresponding to a viscometric fixed point of a free fluid stream as described in claim 1, dependent claims being advantageous embodiments.

In a second aspect of the disclosure, there is provided a data processing device, a computer program, and a computer-readable medium to implement the method of the first aspect.

In a third aspect of the disclosure, there is provided a process for measuring the dynamic viscosity of a fluid stream.

In a fourth aspect of the disclosure, there is provided a system for measuring the dynamic viscosity of a fluid stream.

### Advantages of the invention

A first outstanding advantage of the invention is that the specific temperature, Tlog, corresponding to a viscometric fixed point of a fluid may be quickly measured without relying on punctual sampling of the fluid and ex-situ chemical analysis.

A second outstanding advantage of the invention is that the specific temperature, Tlog, corresponding to a viscometric fixed point of the fluid stream is measured contactless. A continuous monitoring of a viscometric fixed point of the fluid stream is then allowed without disturbing or disrupting the fluid stream. Time and costs may be saved in the manufacturing processes of products such as glass fibres-based products.

A third advantage of the invention is that it can be easily implemented in existing manufacturing lines provided that the configuration of manufacturing lines allows the measurement the dynamic viscosity and the temperature of the free fluid stream within an area of interest of said free fluid stream.

## Brief description of drawings

Fig. 1 is a schematic representation of an example of manufacturing line of glass fibres.
Fig. 2 is a schematic cross section representation of example of a bushing and a fiberizing tool from a detail I of the fig. 1.

Fig. 3 is a schematic representation of a detail II of the fig. 2.
Fig. 4 is a data flow diagram of a computer implemented method according to the first aspect of the invention.
Fig. 5 is a physical data flow diagram of a processing data system to implement a method according to the first aspect of the invention.
Fig. 6 is a schematic representation of a system according to the fourth aspect of the invention.
Fig. 7 is a plot of the dynamic viscosity - temperature relationship for several fluids in a chemical composition range.

## Detailed description of embodiments

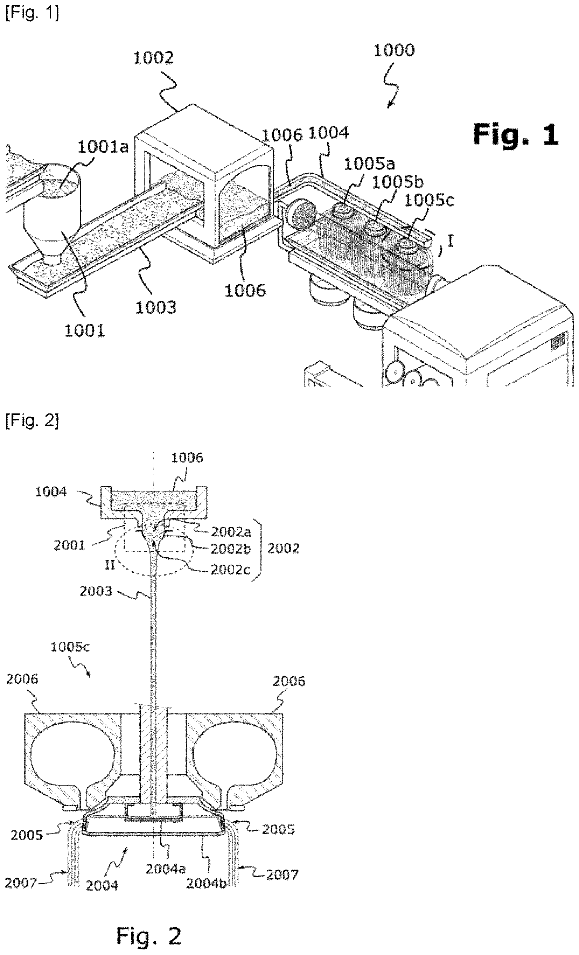

With reference to fig. 1, a manufacturing line 1000 of glass or stone fibres though the method of internal centrifugation may generally comprise silos 1001 for storing raw materials 1001a, e.g., minerals compounds and/or cullet, a glass or stone melting furnace 1002 to melt raw materials 1001a which are conveyed from silos 1001 by means of conveyor 1003, and one or more fiberizing tools 1005a, 1005b, 1005c which are fed with molten glass or stone 1006 through a forehearth 1004. The forehearth is usually designed as an open or closed channel provided with openings right above each fiberizing tools 1005a, 1005b, 1005c to fed each of them with molten glass or stone 1006.

With reference to fig. 2, an opening 2001 of a forehearth 1004 may be provided with a bushing 2002 which is here exemplified as an opening 2002a extended by a nozzle or drain pan 2002b and terminated by another opening 2002c from which the molten glass or stone 1006 flows as a fluid stream 2003 by gravity to a fiberizing tool 1005c located beneath. The fiberizing tool 1005c may comprise a spinner 2004 made of bucket 2003a with side openings and of an annular wall 2004b provided with a plurality of calibrated holes. Upon high-speed rotation, the molten glass or stone 1006 coming out of the bushing 2002 and falling into the bucket 2004a is projected out from the side openings bucket 2003a toward the inner surface of the annular wall 2004b, and then projected though the calibrated holes to cast glass threads 2005.

The fiberizing tool 1005c may also comprise a ring burner 2006 that throws out a high-temperature gaseous stream or jet in a substantially tangent direction to the annular wall to pull down the casted glass threads 2005, to heat and strength them and, finally, form glass fibres 2007. It may also comprise a gas blowing device 2008 located below the ring burner 2005 to prevent the glass fibres 2007 from departing too far away from the rotation axis of the spinner 2004.

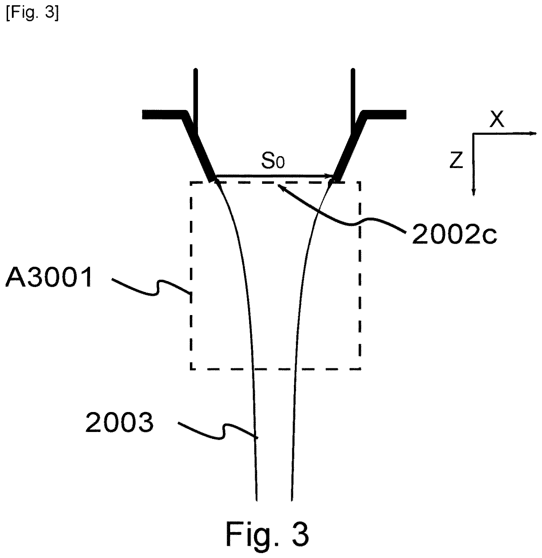

As exemplified on fig. 2 and fig. 3, when the molten glass 1006 is flowing from the opening 2002c of the bushing 2002 by gravity, it is flowing freely as a free fluid stream 2003 with constant acceleration.

By 'free fluid stream', it should be understood a fluid stream with open boundaries, i.e., for instance, the fluid stream is not in contact with a wall of a tube or the like that acts as boundary for said fluid stream. On the other hand, by 'closed fluid stream', it should be understood a fluid stream with at least one close boundary, i.e., for instance, a fluid stream flows through a tube or the like and the wall of the tube acts as a close boundary for the fluid stream. The present invention may apply on both free and close fluid stream, preferably on free fluid stream.

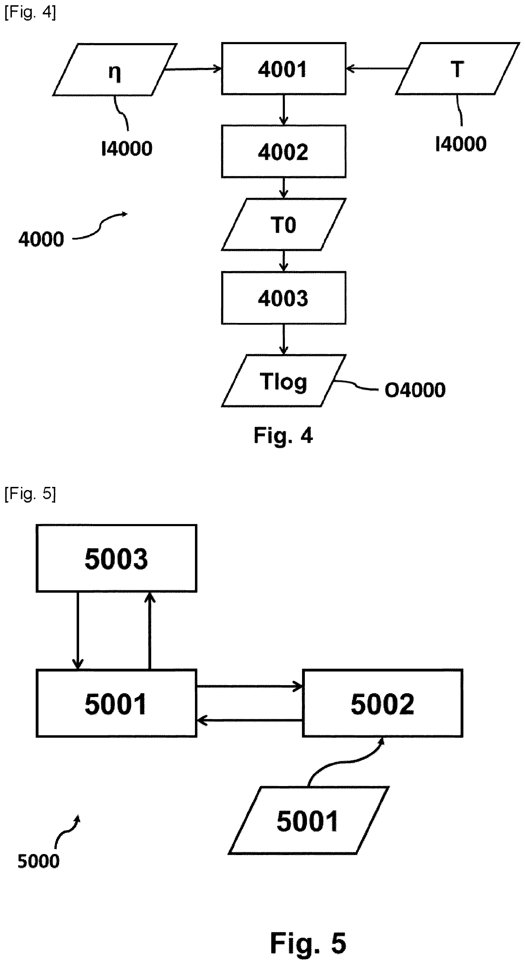

With reference to Fig. 3 and Fig. 4, in a first aspect of the invention, there is provided a computer implemented method 4000 for determining the specific temperature, Tlog, corresponding to a viscometric fixed point of a fluid 2003,

wherein said method 4000 takes as input I4000 one value of the dynamic viscosity, $\mu$, and one value of the temperature, T, of the fluid 2003; wherein said method 4000 provides as output 04000 a value of the characteristic temperature Tlog;
wherein said method 4000 comprises the following steps:

(a) providing 4001 a VFT-like model, wherein the adjustable parameters of the VFT-like model comprise a chemical composition-dependent adjustable parameter, T0, which depends on the chemical composition of the fluid, and wherein the adjustable parameters of said VFT-like model are statistically adjusted over a dataset of experimental and/or simulated temperature-dynamic viscosity values for said fluid within a chemical composition range;
(b) computing 4002 a value of the parameter, T0, from said VFT-like model, wherein the value of the dynamic viscosity, $\mu$, and the value of the temperature, T, of the fluid 2003 are provided as input data to said VFT-like model;
(c) computing 4003 a value of the characteristic temperature Tlog, corresponding to a viscometric fixed point, of a fluid 2003 from said VFT-like model, wherein the value of the single parameter, T0, computed at step (b) and the viscometric fixed point are provided as input data to said VFT-like model.

In the context of the disclosure, a VFT-like model is a model based on the well-known parametric Vogel-Fulcher-Tammann equation, also called VFT equation, which is commonly used to describe the viscosity of fluids as a function of temperature. The VFT equation may be viewed as a kind of Arrhenius equation the adjustable parameters of which are modified to better mimic the change in viscosity of fluids as a function of temperature in particular within the supercooled regime, when approaching the temperature of what is called the glass transition.

The parameters of the VFT equation are empirical fitting parameters the value of which are adjusted by a fitting operation over experimental data for a specific chemical composition of the fluid. Since the adjustable parameters are not dependant of the chemical composition of the fluid, their values must be adjusted for each chemical composition of the fluid.

The VFT equation may be expressed in its simplest form as:

$$\mu = A_0 e^{\frac{B_0}{T - T_0}}$$

Where $\mu$ is the viscosity of the fluid, T is the temperature of the fluid, and A0, B0 and T0 are adjustable fitting parameters.

The VFT equation may be expressed in more complex forms with a greater number of adjustable fitting parameters depending on the level of reproducibility and accuracy sought to model experimental data. However, as a rule of thumb, the number of adjustable fitting parameters may not be too great to avoid overfitting.

In the present invention, as recited in step (a), the VFT-like model is based on or derived from the VFT equation and, contrary to the art, the VFT-like model comprises a chemical composition-dependent adjustable parameter, T0, which depends on the chemical composition of the fluid. Since the parameter, T0, is dependent on the chemical composition of the fluid, the VFT-like model according to the invention allow to statistically adjust its adjustable parameter over a dataset of experimental and/or simulated temperature-dynamic viscosity values for said fluid within a chemical composition range.

In certain embodiments, the chemical composition-dependent adjustable parameter, T0, may be non-linear or linear function of the chemical composition of the fluid 2003. In complement embodiments, the chemical composition-dependent adjustable parameter, T0, may be further weighted with an adjustable weighing factor, $\beta$. This adjustable weighing factor, $\beta$, may be an adjustable fitting parameter among the adjustable parameters of the VFT-like model that are statistically adjusted over a dataset of experimental and/or simulated temperature-dynamic viscosity values for said fluid within a chemical composition range.

In preferred embodiments, the VFT-like model may be provided with the following parameterized equation.

$$log_{10}(\mu) = A_0 + \frac{B_0 + \beta T_0}{T - T_0}$$ where $A_0$, $B_0$ and $\beta$ are adjustable parameters, $\mu$ is the dynamic viscosity, T is the temperature, $T_0$ is the single composition-dependent adjustment parameter.

The width of the chemical composition range may be adapted depending on the nature of the fluid. In most practical cases, in particular for molten glass or stone, it was found that a 5 points-width range, preferably a 3-points width range, centred on a mean value for each chemical constituents of the fluid may be useful. The amount of each chemical constituent of the fluid may be expressed in relative or absolute weight percent or atom percent.

One outstanding function of the VFT-like model according to the invention allow, once its adjustable parameters are statistically adjusted over a dataset of experimental and/or simulated temperature-dynamic viscosity values within a chemical composition range of the fluid, is to provide a kind of master curve of the temperature-dynamic viscosity relationships of the fluid stream within said chemical composition range of said fluid. The master curve provides a temperature - chemical composition superposition in the variation of dynamic viscosity of the fluid. It is this superposition which is then exploited in the subsequent steps (b) and (c) of the method according to the invention, to determine the specific temperature, Tlog, corresponding to a viscometric fixed point of a fluid stream.

The value of the dynamic viscosity and the value of the temperature of the fluid 2003 provided as input data to the method 4000 according to the invention may be obtained by any means.

For instance, referring to Fig. 3, the temperature may be measured by means of a thermocouple arranged in the area (A3001) of interest, or by contactless pyrometric sensor.

The dynamic viscosity may be measured with methods and devices commonly used in the field. For instance, it may be determined through methods based on the Hagen-Poiseuille law such as the method described in US 4 877 436 A [SHEINKOP ISAC [US]] 31.10.1989. In preferred embodiments, it may be measure though a contactless method with the digital processing of at least one image of the area A3001 of interest of the fluid stream 2003. Such method is described in PCT/EP2022/086258 [SAINT-GOBAIN ISOVER] whose content is hereby incorporated by reference.

As defined previously, a fixed viscometric point is a pair of temperature-viscosity values which characterize the viscosity-temperature behaviour of a fluid with a given chemical composition. In the context of the invention, the value of the fixed viscometric point may be arbitrary defined in view of the operation to be carried out on the fluid. It may also be defined in conformity with the uses and/or standards in the technical field of interest for the fluid. For example, it may be a working point corresponding to a most practical value for viscosity for casting the fluid in certain shapes.

In preferred embodiments, the fluid may be molten glass or stone. The present invention is indeed particularly advantageous to monitor the values of one or more viscometric fixed points of a stream of molten glass or stone, that are thereafter used as proxies to detect drift in the chemical composition of the fluid trough the value of the specific temperature, Tlog, corresponding to the viscometric fixed points. This is particularly relevant in a manufacturing line of glass or stone fibres to monitor drift in the chemical composition of a molten glass or stone (1006) flowing through a bushing (2002) by gravity.

In certain complementary embodiments, the viscometric fixed point is chosen among the working point, the softening point, the annealing point, the strain point, and the transformation point. For molten glass and stone, these five viscometric points are extensively detailed in the ISO 7884-1:1987 standard.

In certain embodiments, with reference to Fig. 3, the fluid is a free stream 2003 flowing from an opening 2002c with a constant acceleration, preferably from an opening 2002c with a circular section, and the value dynamic viscosity and the value of the temperature of the free fluid stream 2003 are values within an area A3001 of interest of the free stream.

A circular opening 2002c is a geometric configuration corresponding to most of cases in current industrial lines. Consequently, the fluid stream 2003 may also have circular section.

In a second aspect of the disclosure, with reference to Fig. 5, there is provided a data processing system 5000 comprising means 5001 for carrying out a method 4000 according to any one of the embodiments of the first aspect of the invention. There is also provided a computer program I5001 comprising instructions which, when executed by a computer, cause the computer to carry out a method 4000 according to any one of embodiments of the first aspect of the invention.

The data processing system 5000 comprises means 5001 for carrying out a method according to any of the embodiments of the first aspect of the invention. Example of means 5001 may be a device which can be instructed to carry out sequences of arithmetic or logical operations automatically to perform tasks or actions. Such device, also called computer, may comprise one or more Central Processing Unit (CPU) and at least a controller device that are adapted to perform those operations.

It may further comprise other electronic components like input/output interfaces 5003, non-volatile or volatile storage devices 5002, and buses that are communication systems for the data transfer between components inside a computer, or between computers. One of the input/output devices may be user interface for human-machine interaction, for example graphical user interface to display human understandable information.

As calculation may require a lot of computational power to process substantial amounts of data, the data processing system may advantageously comprise one or more Graphical Processing Units (GPU) whose parallel structure makes them more efficient than CPU, in particular for image processing.

The computer program I5001 may be written through any kind of programming language, either compiled or interpreted, to implement the steps of the method according to any embodiments of the first aspect of the invention. The computer program I5001 may be part of a software solution, i.e., part of a collection of executable instructions, code, scripts, or the like and/or databases.

In certain embodiments, there may also be provided a computer-readable storage or medium 5002 comprising instructions which, when executed by a computer, cause the computer to carry out the method according to any of the embodiments of the first aspect of the invention.

The computer-readable storage 5002 may be preferably a non-volatile non-transitory storage or memory, for example hard disk drive or solid-state drive. The computer-readable storage may be removable storage media or a non-removable storage media as part of a computer.

Alternatively, the computer-readable storage may be a volatile memory inside a removable media.

The computer-readable storage 5002 may be part of a computer used as a server from which executable instructions can be downloaded and, when they are executed by a computer, cause the computer to carry out a method according to any of the embodiments described herein.

Alternatively, the program I5001 may be implemented in a distributed computing environment, e.g., cloud computing. The instructions may be executed on the server to which client computers may connect and provide encoded data as inputs to the method. Once data are processed, the output may be downloaded and decoded onto the client computer or directly send, for example, as instructions. This kind of implementation may be advantageous as it can be realised in a distributed computing environment such as a cloud computing solution.

The method according to the present of the invention may be implemented as part of a process. Accordingly, in a third aspect of the invention, there is provided process for measuring for determining the specific temperature, Tlog, corresponding to a viscometric fixed point of a free fluid stream 2003 flowing from an opening 2002c with constant acceleration,

wherein said process comprises the following steps:

(a) measuring one value of the dynamic viscosity and one value of the temperature of the free fluid stream 2003

within an area A3001 of interest of said free fluid stream 2003;

(b) providing, with a data processing device 5000, providing a VFT-like model, wherein said the adjustable parameters of the VFT-like model comprise a chemical composition-dependent adjustable parameter, T0, which depends on the chemical composition of the fluid, and wherein which the adjustable parameters of said VFT-like model are statistically adjusted over a dataset of experimental and/or simulated temperature-dynamic viscosity values for said fluid within a chemical composition range;

(b) computing, with a data processing device 5000, a value of said single parameter, T0, from said VFT-like model, wherein the value of the dynamic viscosity and the value of the temperature of the free fluid stream 2003 within the area A3001 of interest are provided as input data to said to said VFT-like model;

(c) computing, with a data processing device 5000, a value of the characteristic temperature Tlog, corresponding to a viscometric fixed point, of a free fluid stream 2003 from said VFT-like model, wherein the value of the single parameter, T0, computed at step (b) and the viscometric fixed point are provided as input data to said VFT-like model.

All the features which are detailed in the embodiments of the method according to the first aspect of the invention may be applied to the process according to the third aspect.

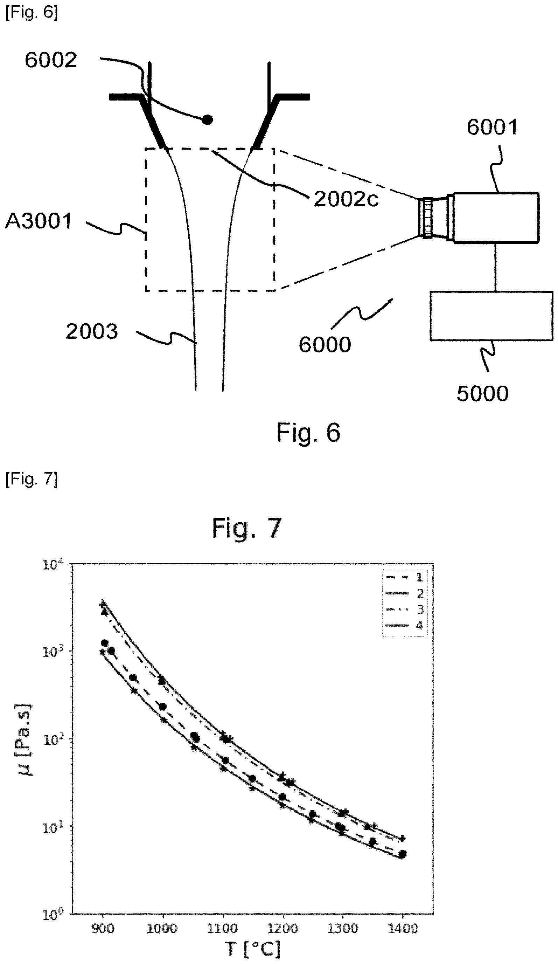

In a fourth aspect of the invention, with reference to Fig. 6, there is provided a system 6000 for determining the specific temperature, Tlog, corresponding to a viscometric fixed point of a fluid stream (2003) flowing from an opening 2002c with constant acceleration, wherein said system comprises:

- a first device 6001 configured to measure one value of the dynamic viscosity and one value of the temperature of the free fluid stream 2003 within an area A3001 of interest of said free fluid stream 2003;
- a second device 6002 configured to measure one value of the temperature of the free fluid stream 2003 within an area A3001 of interest of said free fluid stream 2003;
- a data processing device 5000 according to the second aspect of the invention, wherein said data processing device is configured to receive the measured values from the first and second devices.

In example embodiments, the first device 6001 may be measured by means of a thermocouple in contact with the fluid stream in the area (A3001) of interest, or a contactless pyrometric sensor. The second device (6002) may be device implementing method based on the Hagen-Poiseuille law such as the method described in US 4 877 436 A [SHEINKOP ISAC [US]] 31.10.1989.

In certain advantageous embodiments, the first (6001) and second (6002) devices are parts of the same device.

In preferred embodiments, the first device is a device adapted for a contact-less measure of the dynamic viscosity of the fluid through the digital processing of at least one image of the area A3001 of interest of the fluid stream 2003. In particular, the first device may be a device which implement a method as described in PCT/EP2022/086258 [SAINT-GOBAIN ISOVER] whose content is hereby incorporated by reference.

The process and the system according to the third and fourth aspects respectively may be advantageously used in a manufacturing line of glass or sone fibres to monitor drifts in the chemical composition of a molten glass or stone (1006) flowing through a bushing (2002) by gravity.

In advantageous embodiments, the so monitored drifts in the chemical composition may be implemented into a feedback operation for adjusting the temperature of the stone or glass in the vicinity of the bushing (2002) and/or the chemical composition of the molten glass or stone (1006).

## Examples

Forty-one mineral glasses were formulated in the chemical composition range of the Tab. 1 which gives the nature of the oxides and the minimum and maximum limits of their relative content expressed in weight percent.

| Tab. 1 | $Al_2O_3$ | $B_2O_3$ | CaO | F | $K_2O$ | MgO | $Na_2O$ | $SiO_2$ |
|---|---|---|---|---|---|---|---|---|
| Min. wt% | 1 | 3 | 6 | 0 | 0.5 | 2 | 13 | 60 |
| Max wt% | 4 | 7 | 9 | 1 | 2 | 4 | 17 | 66 |

For each mineral glass, the dynamic viscosity between 900°C and 1400°C were measured experimentally. The viscosity - temperature dependence is illustrated on Fig. 7. For sake of readability, the data (points) for only four glasses is plotted, the lines are guides for the eyes. The data of the forty-one glasses all extend between the lower (2) and upper (4) solid curves.

According to embodiments of the first step (a) of the method of the invention, a VFT-like model is provided with the following parameterized equation (1):

$$log_{10}(\mu) = A_0 + \frac{B_0 + \beta\,T_0}{T - T_0}$$

where $A_0$, $B_0$ and $\beta$ are adjustable parameters, $\mu$ is the dynamic viscosity, T is the temperature, $T_0$ is the single composition-dependent adjustment parameter.

The parametrized equation (1) was statistically adjusted over the viscosity - temperature dataset of the forty-one mineral glasses with the following method.

(a) Initializing the adjustable parameters $A_0$, $B_0$ and $\beta$ with the values reported in the first line 'Initial' of Tab. 2;
(b) Adjusting $T_0$ over the full dataset while keeping $A_0$, $B_0$ and $\beta$ constantly fixed, by means of a gradient descent method with a sum of squared errors as a loss function;
(c) Adjusting $A_0$, $B_0$ and $\beta$ over the full dataset while keeping $T_0$ constantly fixed, by means of the a gradient descent with a sum of squared errors as a loss function;
(d) Reiterating steps (b) to (c) until the sum of squared errors reaches a minimum.

The values of the adjustable parameters $A_0$, $B_0$ and $\beta$ obtained from this optimization are reported in the second line 'Optimized' of Tab. 2.

| Tab. 2 | $A_0$ | $B_0$ | $\beta$ |
|---|---|---|---|
| Initial | -1 | 0.0 | 0.0 |
| Optimized | -1.13 | 0.0132 | 9.22 |

The equation (1) with the optimized values can be written:

$$log_{10}(\mu) = A_0 + \frac{B_0 + \beta\,T_0}{T - T_0}$$

This equation (1) can be rewritten as an equation (2) to express $T_0$ in function of T and $\mu$:

$$T_0 = \frac{B_0 - (log_{10}(\mu) - A_0)T}{log_{10}(\mu) - A_0 + \beta}$$

Four example glasses, G1-G4, were formulated, the composition of which are provided in Tab. 3. In Tab. 3, a single measured value of the dynamic viscosity, $\mu$, at a given temperature, T, is reported in Tab. 4. The dynamic viscosity was measured with the Couette's method. Alternatively, it may also be measured with any adapted method, e.g., one of the methods described in US 4 877 436 A [SHEINKOP ISAC [US]] 31.10.1989 or in PCT/EP2022/086258 [SAINT-GOBAIN ISOVER].

| Tab. 3 | G1 | G2 | G3 | G4 |
|---|---|---|---|---|
| $Al_2O_3$ | 2.3 | 2.3 | 2 | 1.75 |
| BaO | 0 | 0 | 0.13 | 0 |
| $B_2O_3$ | 4.6 | 6.1 | 5.25 | 4.75 |
| CaO | 6.6 | 7.1 | 7.4 | 8.1 |
| F | 0.04 | 0.6 | 0 | 0 |
| $Fe_2O_3$ | 0.1 | 0.12 | 0.41 | 0.1 |
| $K_2O$ | 0.6 | 0.55 | 0.8 | 0.6 |

(continued)

| Tab. 3 | G1 | G2 | G3 | G4 |
|---|---|---|---|---|
| $LiO_2$ | 0 | 0.12 | 0 | 0 |
| MgO | 3.37 | 2.85 | 2.45 | 2.45 |
| MnO | 0.38 | 0.39 | 0.52 | 0.009 |
| $Na_2O$ | 16.7 | 14.5 | 16.4 | 16.6 |
| $P_2O_5$ | 0 | 0 | 0.37 | 0 |
| $SiO_2$ | 64.94 | 65 | 64.07 | 65.53 |

| Tab. 4 | G1 | G2 | G3 | G4 |
|---|---|---|---|---|
| $\mu$ [Poises] | 2511.9 | 3090.3 | 91.201 | 13804 |
| T [°C] | 1002 | 999 | 1300 | 903 |

According to the step (b) of the method of the invention, the value of $T_0$ was computed for each of the four example glasses, G1-G4, the composition of which are provided in Tab. 3 and from the corresponding measured dynamic viscosity - temperature T from the equation (2). The results are reported in Tab. 5.

| Tab. 5 | G1 | G2 | G3 | G4 |
|---|---|---|---|---|
| $T_0$[°C] | 330 | 333.4 | 326.1 | 328.3 |

According to the step (c) of the method of the invention, the value of two characteristic temperatures, Tlog, corresponding to two different viscometric fixed points, $\mu_f$, were calculated for each example glasse, G1-G4, from the rewritten equation (1):

$$T_{log} = \frac{B_0 + T_0(\beta + log_{10}(\mu_f) - A_0)}{log_{10}(\mu_f) - A_0}$$

where the variable $\mu$ is replaced by the value of the viscometric fixed point, $\mu_f$, for which the value of Tlog is sought, and the variable $T_0$ is replaced by the value calculated previously for the example glass. The results are reported in Tab. 6. Values of Tlog measured experimentally, and noted Tlog(exp), for the same viscometric fixed points on the same example glasses are also reported for comparison.

| Tab. 6 | | G1 | G2 | G3 | G4 |
|---|---|---|---|---|---|
| $\mu_f$ = 10^3 | Tlog(extra) | 1067 | 1078 | 1055 | 1062 |
| Poise | Tlog(exp) | 1068 | 1080 | 1063 | 1057 |
| $\mu_f$ = 10^5 | Tlog(extra) | 826 | 835 | 817 | 822 |
| Poise | Tlog(exp) | 825 | 833 | 815 | 828 |

The results in Tab. 6 clearly and unambiguously show that the method according to the invention allows to measure the specific temperature, Tlog, corresponding to a viscometric fixed point without relying on punctual sampling of the fluid and ex-situ chemical analysis.

**Citation List**

Patent Literature

US 4 877 436 A [SHEINKOP ISAC [US]] 31.10.1989.
PCT/EP2022/086258 [SAINT-GOBAIN ISOVER]

Non-Patent Literature

ISO 7884-1:1987, Glass - Viscosity and viscometric fixed points - Part 1: Principles for determining viscosity and viscometric fixed points.
ISO 7884-2:1987, Glass - Viscosity and viscometric fixed points - Part 2: Determination of viscosity by rotation viscometers.

**Claims**

1.  A computer implemented method (4000) for determining the specific temperature, Tlog, corresponding to a viscometric fixed point of a fluid, wherein said method (4000) takes as input (I4000) one value of the dynamic viscosity, $\mu$, and one value of the temperature, T, of the fluid (2003);

    wherein said method (4000) provides as output (04000) a value of the characteristic temperature Tlog;
    wherein said method (4000) comprises the following steps:

    (a) providing (4001) a VFT-like model, wherein the adjustable parameters of the VFT-like model comprise a chemical composition-dependent adjustable parameter, T0, which depends on the chemical composition of the fluid, and wherein the adjustable parameters of said VFT-like model are statistically adjusted over a dataset of experimental and/or simulated temperature-dynamic viscosity values for said fluid within a chemical composition range;
    (b) computing (4002) a value of the parameter, T0, from said VFT-like model, wherein the value of the dynamic viscosity, $\mu$, and the value of the temperature, T, of the fluid (2003) are provided as input data to said VFT-like model;
    (c) computing (4003) a value of the characteristic temperature, Tlog, corresponding to a viscometric fixed point, of the fluid (2003) from said VFT-like model, wherein the value of the single parameter, T0, computed at step (b) and the viscometric fixed point are provided as input data to said VFT-like model.

2.  A computer implemented method (4000) according to claim 1, wherein the chemical composition-dependent adjustable parameter, T0, may be non-linear or linear function of the chemical composition of the fluid stream (2003).

3.  A computer implemented method (4000) according to claim 2, wherein the VFT-like model is provided with the following parameterized equation.

$$log_{10}(\mu) = A_0 + \frac{B_0 + \beta\, T_0}{T - T_0},$$

    where $A_0$, $B_0$ and $\beta$ are adjustable parameters, $\mu$ is the dynamic viscosity, T is the temperature, $T_0$ is the single composition-dependent adjustment parameter.

4.  A computer implemented method (4000) according to any of claim 1 to 3, wherein the fluid is molten glass or stone.

5.  A computer implemented method (4000) according to claim 4, wherein the viscometric fixed point is chosen among the working point, the softening point, the annealing point, the strain point, and the transformation point.

6.  A computer implemented method (4000) according to any of claims 1 to 5, wherein the opening (2002c) has a circular section.

7. A data processing device (5000) comprising means for carrying out a method (4000) according to any of claims 1 to 6.

8. A computer program (15001) comprising instructions which, when the program is executed by a computer, causes the computer to carry out a method (4000) according to any of claims 1 to 6.

9. A computer-readable medium (5002) comprising instructions which, when the program is executed by a computer, causes the computer to carry out a method (4000) according to any of claims 1 to 6.

10. A process for measuring for determining the specific temperature, Tlog, corresponding to a viscometric fixed point of a free fluid stream (2003) flowing from an opening (2002c) with a constant acceleration,
wherein said process comprises the following steps:

(a) measuring one value of the dynamic viscosity and one value of the temperature of the free fluid stream (2003) within an area (A3001) of interest of said free fluid stream (2003);
(b) providing, with a data processing device (5000), providing a VFT-like model, wherein said the adjustable parameters of the VFT-like model comprise a chemical composition-dependent adjustable parameter, T0, which depends on the chemical composition of the fluid, and wherein which the adjustable parameters of said VFT-like model are statistically adjusted over a dataset of experimental and/or simulated temperature-dynamic viscosity values for said fluid within a chemical composition range;
(b) computing, with a data processing device (5000), a value of said single parameter, T0, from said VFT-like model, wherein the value of the dynamic viscosity and the value of the temperature of the free fluid stream (2003) within the area (A3001) of interest are provided as input data to said to said VFT-like model;
(c) computing, with a data processing device (5000), a value of the characteristic temperature Tlog, corresponding to a viscometric fixed point, of a free fluid stream (2003) from said VFT-like model, wherein the value of the single parameter, T0, computed at step (b) and the viscometric fixed point are provided as input data to said VFT-like model.

11. A system (6000) for determining the specific temperature, Tlog, corresponding to a viscometric fixed point of a fluid stream (2003) flowing from an opening (2002c) with constant acceleration, wherein said system comprises:

- a first device (6001) configured to measure one value of the dynamic viscosity and one value of the temperature of the free fluid stream (2003) within an area (A3001) of interest of said free fluid stream (2003);
- a second device (6002) configured to measure one value of the temperature of the free fluid stream (2003) within an area (A3001) of interest of said free fluid stream (2003);
- a data processing device (5000) according to claim 7, wherein said data processing device is configured to receive the measured values from the first and second devices.

12. A system (6000) according to claim 11, wherein the first (6001) and second (6002) devices are parts of the same devices.

13. A system (6000) according to claim 11, wherein the first device is a device adapted for a contact-less measure of the dynamic viscosity of the fluid through the digital processing of at least one image of the area (A3001) of interest of the fluid stream (2003).

14. Use of a process according to claim 10 or a system according to claim 11 in a manufacturing line of glass fibres in a manufacturing line of glass or sone fibres to monitor drifts in the chemical composition of a molten glass or stone (1006) flowing through a bushing (2002) by gravity.

15. Use according to claim 14, wherein the monitored chemical composition is implemented into a feedback operation for adjusting the temperature of the stone or glass in the vicinity of the bushing (2002) and/or the chemical composition of the molten glass or stone (1006).

[Fig. 1]

Fig. 1

[Fig. 2]

Fig. 2

[Fig. 3]

Fig. 3

[Fig. 4]

η  →  4001  ←  T

I4000          I4000

4000 ⟶

4001 → 4002

4002 → T0

T0 → 4003

4003 → Tlog

O4000

**Fig. 4**

[Fig. 5]

5003

5001   ⇄   5002

5001

5000

**Fig. 5**

[Fig. 6]

Fig. 6

[Fig. 7]

Fig. 7

Europäisches
Patentamt

European
Patent Office

Office européen
des brevets

# EUROPEAN SEARCH REPORT

Application Number

**EP 23 16 6424**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/287499 A2 (CORNING INC [US]) 19 January 2023 (2023-01-19) * abstract * * paragraphs [0054] – [0059] * | 1-15 | INV. G01N11/00 |
| A,D | US 4 877 436 A (SHEINKOP ISAC [US]) 31 October 1989 (1989-10-31) * abstract; figure 8a * | 1,7, 10-15 | |

|  |  |
|---|---|
|  | TECHNICAL FIELDS SEARCHED (IPC) |
|  | G01N |

The present search report has been drawn up for all claims

| Place of search | Date of completion of the search | Examiner |
|---|---|---|
| The Hague | 6 September 2023 | de Bakker, Michiel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

      .....................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 6424

06-09-2023

| Patent document cited in search report | | Publication date | Patent family member(s) | Publication date |
|---|---|---|---|---|
| WO 2023287499 | A2 | 19-01-2023 | NONE | |
| US 4877436 | A | 31-10-1989 | NONE | |

**REFERENCES CITED IN THE DESCRIPTION**

**Patent documents cited in the description**

- US 4877436 A, SHEINKOP ISAC
- EP 2022086258 W